**Europäisches Patentamt**

**European Patent Office**

**Office européen des brevets**

(19)

(11) Numéro de publication : **0 515 297 A1**

## (12) DEMANDE DE BREVET EUROPEEN

(21) Numéro de dépôt : **92480068.3**

(22) Date de dépôt : **18.05.92**

(51) Int. Cl.⁵ : **A01C 1/04,** B65D 75/52

(30) Priorité : **21.05.91 FR 9106119**

(43) Date de publication de la demande :
**25.11.92 Bulletin 92/48**

(84) Etats contractants désignés :
**BE DE DK ES FR GB IT LU MC NL PT**

(71) Demandeur : **PLAN STE DE PRODUCTION
GRAINIERE PLAN SPG
481 rue du Petit Mas, ZI de Courtine
F-84000 Avignon (FR)**

(72) Inventeur : **Desbouis, Jacques
Route de Velleron
F-84250 Le Thor (FR)**

(74) Mandataire : **Hautier, Jean-Louis
OFFICE MEDITERRANEEN DE BREVETS
D'INVENTION 24 rue Masséna
F-06000 Nice (FR)**

(54) **Conditionnement pour des produits du type semence.**

(57) Un conditionnement pour produits du type semence comporte deux ou plusieurs sous-réservoirs (1, 2), pour permettre l'utilisation d'une partie du produit seulement tout en maintenant la possibilité de stocker le reste du produit jusqu'à son ultime utilisation.

Chaque sous-réservoir est formé d'une façon à comporter un container principal (3, 4) pour stocker le produit, ainsi qu'une partie allongée (7, 8), qui est destinée à être enfoncée dans le sol après l'ensemencement afin de permettre l'utilisation du sous-réservoir comme moyen de repère de l'ensemencement.

Le container (3, 4) comporte une extrémité en forme d'entonnoir (5, 6), de façon à ce que la découpe de cet entonnoir produise une ouverture dont la grandeur dépend de l'endroit de la découpe.

FIG.1

EP 0 515 297 A1

La présente invention concerne un conditionnement pour des produits du type semence, faisant à la fois réservoir pour le produit avant son utilisation et moyen de repère pour le produit après son utilisation, notamment après l'ensemencement, comportant un réservoir pour le produit pouvant être utilisé comme repère dans un milieu dans lequel le produit est introduit, pour marquer l'endroit dans lequel le produit est introduit dans ledit milieu.

Les produits du type semence, tels que les graines etc., sont aujourd'hui vendus couramment en forme de sachets qui sont réalisés en papier fermés par collage ou, pour améliorer leur étanchéité, en sachets en complexe aluminium/papier et film plastique thermoscellable.

Lors de l'utilisation d'un produit comme décrit ci-dessus, notamment des semences en sachets en papier ou autres, on ouvre le sachet, on enlève les graines pour l'ensemencement et, ensuite, on utilise tout ou une partie du sachet pour le fixer, par exemple, à l'aide d'un bâton à l'endroit de l'ensemencement, pour rappeler ultérieurement la nature dudit ensemencement, le nom du producteur, la date etc. .

L'utilisation de ce produit conditionné dans une forme décrite ci-dessus comporte plusieurs désavantages, notamment dans le cas où seulement une partie des graines est utilisée et le reste devrait être conservé dans des conditions favorables jusqu'à leur utilisation, car la refermeture étanche d'un sac en papier collé ou même d'un sac en complexe aluminium/papier qui a été fermé par un film plastique thermoscellable n'est plus possible. Il en suit que les graines qui sont maintenues dans des conditions non étanches pourraient se dégrader.

Ensuite, il n'est pas possible d'utiliser ces sachets pour le marquage de l'endroit de l'ensemencement si, uniquement, une partie des graines a été utilisée et le sachet devrait servir pour conserver le reste du produit.

Il est donc un des buts de la présente invention de créer un conditionnement pour des produits, comme défini ci-dessus, qui permette un fractionnement du produit dans l'emballage de sorte que les parties du produit qui ne sont pas utilisées lors de sa première ouverture, peuvent être conservées de façon étanche.

Un autre but de la présente invention est de créer un conditionnement qui peut être utilisé directement comme moyen de repère sur l'endroit de l'ensemencement, et cela au fur et à mesure de l'utilisation partielle du produit, notamment des graines d'ensemencement.

Un autre but de la présente invention est encore de créer un conditionnement qui peut être utilisé directement comme semoir, et qui comporte donc une forme qui permet de transformer le conditionnement en semoir au moyen d'une simple intervention lors de l'ouverture du conditionnement.

L'état de la technique peut être défini par les brevets suivants :

- USA - 4,168,002-

Ce brevet décrit un conditionnement pour des semences faisant à la fois office de réservoir pour le produit avant son utilisation et de plantoir pour semer les semences ; ledit conditionnement se terminant par une partie en pointe qui permet de planter, en terre, le condtionnement qui fait, également, support d'affichettes.

- USA - 3,098,321-

Ce brevet décrit des affichettes-plantoirs sur lesquelles sont maintenues des graines à semer.

- USA - 3,098,320 -

Ce brevet décrit un moyen pour planter des semences à la bonne profondeur. A cet effet, il est constitué d'un pic vertical en matière rigide qui peut se planter dans le sol de manière à mettre en place les semences à la profondeur prédéterminée, lesdites semences sont fixées sur ledit pic. Ledit pic peut comporter une partie qui fait office de support d'affiche, par exemple pour des instructions ou des informations sur les semences.

Les buts de la présente invention, ci-dessus énumérés, sont obtenus avec un conditionnement pour des produits du type semence, faisant à la fois réservoir pour le produit avant son utilisation et moyen de repère pour le produit après son utilisation, notamment après l'ensemencement, comportant un réservoir pour le produit pouvant être utilisé comme repère dans un milieu dans lequel le produit est introduit pour marquer l'endroit auquel le produit est introduit dans ledit milieu, ledit réservoir comportant une forme présentant un container principal pour le produit, container à partir duquel s'étend une partie de forme essentiellement allongée permettant de planter le conditionnement dans le milieu d'utilisation du produit caractérisé en ce que le réservoir comporte au moins deux semi-réservoirs reliés l'un à l'autre de façon détachable, ces deux semi-réservoirs sont essentiellement identiques ; les deux semi-réservoirs sont attachés l'un à l'autre de façon tête-bêche, le container principal de chaque semi-réservoir étant fixé sur la partie allongée de l'autre.

Les fixations entre les deux semi-réservoirs sont exécutées en points de coupe ou de cassure ayant une section transversale réduite par rapport aux autres dimensions des semi-réservoirs .

Chaque container principal comporte une première extrémité de laquelle s'étend la partie allongée et une seconde extrémité formant un entonnoir destiné à être découpé pour ouvrir le container .

La découpe de l'entonnoir s'effectue de façon à pouvoir choisir la grandeur de l'ouverture en fonction de l'endroit où l'on découpe l'entonnoir.

L'un au moins des deux semi-réservoirs comporte un moyen de saisie ou de suspension.

Les semi-réservoirs sont fabriqués par thermoscellage d'une feuille de plastique sur une partie de fond thermoformée représentant les deux semi-containers .

Les deux semi-réservoirs ont chacun une forme en L.

Le semi-réservoir comporte un container principal et une partie allongée les deux éléments et étant creux et entourés d'un rebord.

Le container comporte à son extrémité opposée de l'extrémité de laquelle s'étend la partie allongée , un entonnoir qui s'étend du container jusqu'à un point, par lequel le semi-réservoir est fixé sur la partie allongée de l'autre semi-réservoir, qui est identique au semi-réservoir et qui est fixé de sa part sur la partie allongée du premier semi-réservoir au niveau du point.

De façon avantageuse, les deux semi-réservoirs du conditionnement, selon la présente invention, peuvent être fixés sur une plaque de présentation en plastique ou en carton, et ladite plaque peut porter des imprimés de publicité, des renseignements sur le produit etc. .

L'invention sera maintenant décrite plus en détail, en se référant aux dessins, donc :

La figure 1 représente une vue de projection sur le plan principal du conditionnement selon la présente invention.

La figure 2 est une coupe selon la ligne I-I de la figure 1.

La figure 3 est une coupe selon la ligne II-II de la figure 1.

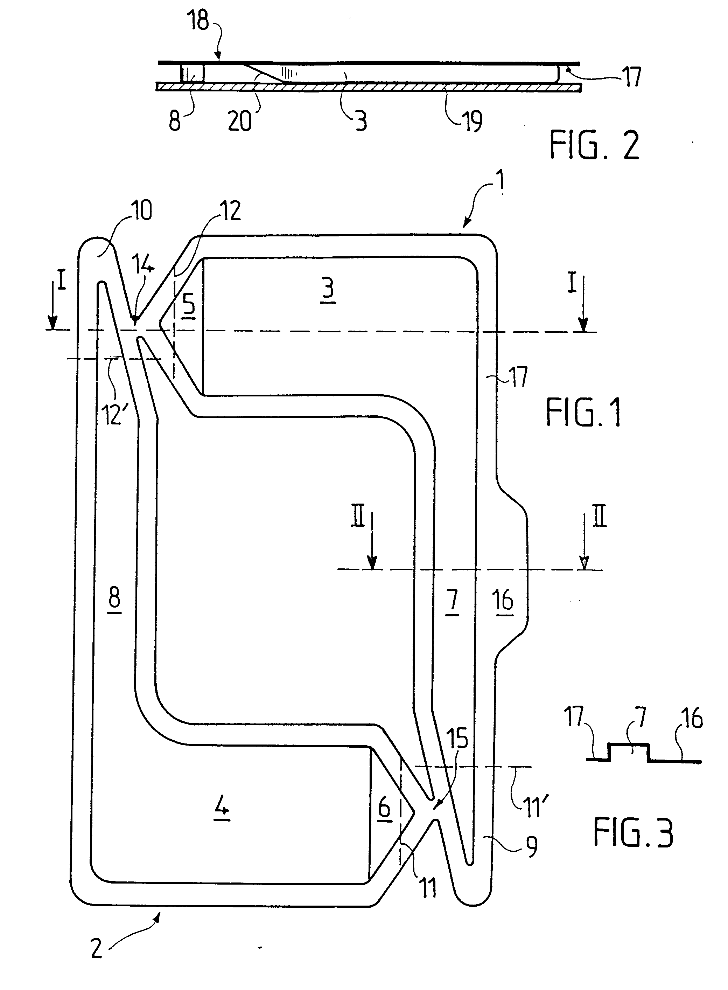

En se référant à la figure 1, on voit les deux semi-réservoirs 1 et 2 qui ont chacun une forme en L, et qui sont arrangés, l'un et l'autre, de façon tête-bêche. Le semi-réservoir 1 comporte un container principal 3 et une partie allongée 7, les deux éléments 3 et 7 étant creux et entourés d'un rebord 17. Le container 3 comporte, à son extrémité opposée de l'extrémité de laquelle s'étend la partie allongée 7, un entonnoir 5, qui s'étend du container 3 jusqu'à un point 14, par lequel le semi-réservoir 1 est fixé sur la partie allongée 8 de l'autre semi-réservoir 2, qui est identique au semi-réservoir 1 et qui est fixé de sa part sur la partie allongée 7 du premier semi-réservoir au niveau du point 15.

Le deuxième semi-réservoir 2 comporte, en outre, un container 4 et un entonnoir 6 qui correspondent, dans leurs formes également, aux éléments correspondants du premier semi-réservoir 1.

Les lignes 11 et 12 qui traversent les entonnoirs 5 et 6 sont situées entre les points 14 et 15 et entre les containers 3 et 4, respectivement à un endroit arbitraire, car ces lignes 11 et 12 représentent l'endroit de la découpe servant à l'ouverture des semi-réservoirs après le détachement des deux semi-réservoirs l'un de l'autre suivant la cassure ou la découpe des points 14 et 15. Bien entendu, il est aussi possible d'ouvrir les semi-réservoirs par une découpe au niveau des lignes pointillées 11' et 12'.

Suivant l'endroit exact de la ligne de découpe 11, 11', 12 ou 12', la grandeur de l'ouverture des containers 3 et 4 peut être choisie selon la préférence de l'utilisateur pour favoriser un débit désiré d'écoulement du contenu de ces semi-réservoirs.

En se tournant maintenant vers la figure 2, on voit que le container 3 (et symétriquement également le container 4) est constitué d'un creux plat, qui a une dimension de hauteur correspondant, au minimum, au diamètre des graines qui sont destinées à être stockées dans ce conditionnement.

Le container 3 ainsi que les autres parties 4, 7 et 8 de ce conditionnement sont maintenus entre une feuille de plastique 18, qui est thermoscellée sur le rebord 17 qui entoure chacun des semi-réservoirs 1 et 2, et entre une plaque de présentation 19, qui peut être formée en plastique ou en carton, et sur laquelle on peut prévoir d'imprimer des informations de publicité, des informations sur le produit, le nom du producteur, des dates d'utilisation etc. .

L'ensemble de la partie du fond 20 de cet emballage qui inclut les parties creuses des containers 3 et 4 et des parties allongées 7 et 8 est constitué par un ensemble thermoformé ou injecté, présentant des parties de rebord 17 tout autour des éléments 3, 4, 7 et 8 de façon à ce que ces rebords soient positionnés dans un seul plan, plan sur lequel la feuille 18 peut être thermoscellée par une simple opération.

La figure 3 montre une coupe selon la ligne II-II de la figure 1, et on distingue l'espace creux de la partie 7 ainsi que le rebord 17 et une partie élargie 16 de ce rebord 17, partie élargie qui peut servir comme moyen de saisie par lequel un acheteur peut saisir le conditionnement pour le sortir, par exemple, d'une boîte dans laquelle une pluralité de ces conditionnements sont stockés de façon sérielle.

Comme mentionné ci-dessus, lors de l'utilisation du produit contenu dans ce conditionnement, on va d'abord sectionner ou casser les parties 14 et 15, par lesquelles les deux semi-réservoirs sont attachés l'un à l'autre, et, ensuite, on va ouvrir le premier semi-réservoir par une découpe selon la ligne 11 ou 12 traversant les entonnoirs 5 et 6.

En utilisant le semi-réservoir comme semoir, on peut faire sortir les graines l'une après l'autre à travers l'ouverture obtenue par la découpe selon les lignes 11 et 12 ou 11' et 12', et, suite à la terminaison de l'ensemencement, on redresse le semi-réservoir d'une façon à pouvoir utiliser la partie allongée 7 ou 8 pour l'enfoncer dans le sol, opération qui est facilitée par la prévision d'une pointe 9 ou 10 sur l'extrémité libre de la partie allongée.

De cette façon, on obtient un moyen de repère qui peut être enfoncé dans la terre, à l'endroit de l'ensemencement, de façon fiable sans craindre que le vent l'emporte, comme c'est souvent le cas avec les repères que l'amateur produit à partir des sachets en papier, comme mentionné ci-dessus, qu'il fixe de façon plus ou moins fiable sur un bâton.

Le conditionnement, comme décrit, en détail, ci-dessus, combine donc les avantages de pouvoir utiliser une partie du produit seulement, tout en maintenant les restes du produits bien emballés, et les avantages conférés par la forme des demi-réservoirs qui permettent de l'utiliser comme semoir et comme moyen de repère fiable.

La présente invention a été décrite ci-dessus en se référant à une forme de réalisation préférée et exemplaire, sans être limitée au détail de cette forme d'exécution. Notamment, les formes exactes des semi-réservoirs peuvent être modifiées librement sans partir de l'esprit de la présente invention, et le nombre de réservoirs peut être plus que deux.

## Revendications

1. Conditionnement pour des produits du type semence, faisant à la fois réservoir pour le produit avant son utilisation et moyen de repère pour le produit après son utilisation, notamment après l'ensemencement, comportant un réservoir pour le produit pouvant être utilisé comme repère dans un milieu dans lequel le produit est introduit pour marquer l'endroit auquel le produit est introduit dans ledit milieu, ledit réservoir comportant une forme présentant un container principal (3, 4) pour le produit, container à partir duquel s'étend une partie de forme essentiellement allongée permettant de planter le conditionnement dans le milieu d'utilisation du produit caractérisé en ce

que le réservoir comporte au moins deux semi-réservoirs (1, 2) reliés l'un à l'autre de façon détachable, ces deux semi-réservoirs (1, 2) sont essentiellement identiques ; les deux semi-réservoirs (1, 2) sont attachés l'un à l'autre de façon tête-bêche, le container principal (3, 4) de chaque semi-réservoir (1, 2) étant fixé sur la partie allongée (7, 8) de l'autre.

2. Conditionnement selon la revendication 1 caractérisé en ce

que les fixations entre les deux semi-réservoirs sont exécutées en points de coupe ou de cassure (14, 15) ayant une section transversale réduite par rapport aux autres dimensions des semi-réservoirs (1, 2).

3. Conditionnement selon l'une quelconque des revendications 1 ou 2 caractérisé en ce

que chaque container principal (3, 4) comporte une première extrémité de laquelle s'étend la partie allongée (7, 8) et une seconde extrémité formant un entonnoir (5, 6) destinée à être découpée pour ouvrir le container (3, 4).

4. Conditionnement selon la revendication 3 caractérisé en ce

que la découpe de l'entonnoir (5, 6) s'effectue de façon à pouvoir choisir la grandeur de l'ouverture en fonction de l'endroit (11, 11' ou 12, 12') où l'on découpe l'entonnoir.

5. Conditionnement selon l'une quelconque des revendications 1, 2, 3 ou 4 caractérisé en ce

que l'un au moins des deux semi-réservoirs (1, 2) comporte un moyen de saisie (16) ou de suspension.

6. Conditionnement selon l'une quelconque des revendications 1, 2, 3, 4 ou 5 caractérisé en ce

que les semi-réservoirs (1, 2) sont fabriqués par thermoscellage d'une feuille de plastique (18) sur une partie de fond (20) thermoformée représentant les deux semi-containers (1, 2).

7. Conditionnement selon l'une quelconque des revendications 1 ou 2 caractérisé en ce

que les deux semi-réservoirs (1, 2) ont chacun une forme en L.

8. Conditionnement selon la revendication 7 caractérisé en ce

que le semi-réservoir (1) comporte un container principal (3) et une partie allongée (7), les deux éléments (3) et (7) étant creux et entourés d'un rebord (17).

9. Conditionnement selon la revendication 7 caractérisé en ce

que le container (3) comporte à son extrémité opposée de l'extrémité de laquelle s'étend la partie allongée (7), un entonnoir (5) qui s'étend du container (3) jusqu'à un point (14), par lequel le semi-réservoir (1) est fixé sur la partie allongée (8) de l'autre semi-réservoir (2), qui est identique au semi-réservoir (1) et qui est fixé de sa part sur la partie allongée (7) du premier semi-réservoir au niveau du point (15).

FIG. 2

FIG.1

FIG.3

**Office européen des brevets**

# RAPPORT DE RECHERCHE EUROPEENNE

Numero de la demande

EP    92 48 0068

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | US-A-4 168 002 (CROSBY)<br>* colonne 3, ligne 22 - colonne 5, ligne 50; figures 1-6 *<br>--- | 1 | A01C1/04<br>B65D75/52 |
| A | EP-A-0 078 471 (BROGLI)<br>* page 7, ligne 23 - page 14; figures 1-14 *<br>----- | 1 | |

**DOMAINES TECHNIQUES RECHERCHES (Int. Cl.5)**

A01C
A01G
B65D

Le présent rapport a été établi pour toutes les revendications

| Lieu de la recherche | Date d'achèvement de la recherche | Examinateur |
|---|---|---|
| LA HAYE | 31 AOUT 1992 | VERMANDER R.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
............................................................
& : membre de la même famille, document correspondant

EPO FORM 1503 03.82 (P0402)